# EUROPÄISCHE PATENTSCHRIFT

(11) **EP 2 851 247 B1**
(45) Veröffentlichungstag und Bekanntmachung des Hinweises auf die Patenterteilung: **04.04.2018**
(21) Anmeldenummer: 14183115.6
(22) Anmeldetag: 02.09.2014
(51) Int. Cl.: B60T 7/10

(54) **Betätigungseinrichtung für eine Bremse**
Actuation device for a brake
Dispositif d'actionnement pour un frein

(30) Priorität: 23.09.2013 DE 102013110493
(43) Veröffentlichungstag der Anmeldung: 25.03.2015
(73) Patentinhaber: STILL GmbH, 22113 Hamburg (DE)
(72) Erfinder: Kohl, Tobias, 20257 Hamburg (DE); Wünsch, Alexander, 21029 Hamburg (DE)
(74) Vertreter: Patentship Patentanwaltsgesellschaft mbH

(56) Entgegenhaltungen:
- EP-A1- 0 171 569
- EP-A1- 0 257 145
- EP-A2- 1 997 700
- DE-A1- 10 027 019
- DE-A1- 19 859 496
- GB-A- 2 166 224
- US-A- 6 016 718

## Beschreibung

Die Erfindung betrifft ein Betätigungseinrichtung für eine manuell betätigbare Bremse, insbesondere Feststellbremse, eines Fahrzeugs, insbesondere eines Flurförderzeugs, mit einem schwenkbar gelagerten Betätigungshebel, der mittels eines Übertragungsmittels mit der Bremse in Wirkverbindung steht, wobei der Betätigungshebel einen Handhebel und ein mittels des Handhebels betätigbares Mitnehmerelement aufweist, wobei das Mitnehmerelement mit dem Übertragungsmittel in Verbindung steht, wobei zum Betätigen der Bremse in eine Bremsstellung der Handhebel von einer Lösestellung in eine Bremsstellung betätigbar ist, um das Mitnehmerelement in eine Bremsstellung zur Betätigung der Bremse zu betätigen, und wobei bei in einer Bremsstellung befindlichem Mitnehmerelement der Handhebel in eine Ruhestellung bewegbar ist.

Derartige Betätigungseinrichtungen für die Feststellbremse eines Flurförderzeugs, insbesondere eines Gegengewichtsgabelstaplers, können seitlich neben einem Fahrerarbeitsplatz, beispielsweise einem Fahrersitz, auf einer Motor- oder Batteriehaube angeordnet sein. Alternativ kann die Betätigungseinrichtung an dem vorderen Bereich des Fahrerschutzdaches, dem sogenannten Vorderaufbau, eines Gegengewichtsgabelstaplers, angeordnet werden.

Bei der Anordnung der Betätigungseinrichtung am Vorderaufbau des Flurförderzeugs ragt der Betätigungshebel in der Lösestellung oder der Bremsstellung in den Bereich des Fahrerarbeitsplatzes, beispielsweise einen Beinraum oder Fußraum des Fahrerarbeitsplatzes. Hierdurch kann es zu einer Behinderung für die Bedienperson insbesondere während des Auf- und Absteigens in bzw. aus dem Fahrerarbeitsplatz kommen. Ist an der Betätigungseinrichtung keine Feststelleinrichtung für die Bremsstellung oder Lösestellung vorgesehen, kann es bei einer zufälligen Berührung des Betätigungshebels während des Auf- bzw. Absteigens zu einem ungewollten Betätigen des Betätigungshebels und somit zu einem Betätigen oder Lösen der Feststellbremse kommen. Insbesondere bei Betätigungseinrichtungen, bei denen der Betätigungshebel in der Bremsstellung in den Fahrerarbeitsplatz hineinragt, kann durch eine zufällige Berührung des Betätigungshebels während des Auf- oder Absteigens der Bedienperson die Feststellbremse ungewollt gelöst werden.

Um dies zu vermeiden, ist bei gattungsgemäßen Betätigungseinrichtungen bei in einer Bremsstellung befindlichem Mitnehmerelement der Handhebel in eine Ruhestellung bewegbar, so dass der Handhebel in der Bremsstellung der Bremse nicht mehr störend oder einschränkend in den Fahrerarbeitsplatz hineinragt. Ein zu dem Stand der Technik gehörendes Beispiel ist in EP 1 997 700 A2 offenbart. Eine weitere gattungsgemäße Betätigungseinrichtung ist aus der DE 100 27 019 A1 bekannt. Die Betätigungseinrichtung weist einen Betätigungshebel auf, mittels dem ein von einem Spannhebel gebildetes Mitnehmerelement betätigbar ist. Zum Betätigen der Bremse in eine Bremsstellung ist der Betätigungshebel von einer Lösestellung (Figur 6) in eine Bremsstellung (Figur 7) betätigbar, um das Mitnehmerelement in eine Bremsstellung zur Betätigung der Bremse zu betätigen. Bei in einer Bremsstellung befindlichem Mitnehmerelement kann der Betätigungshebel wieder zurück in die Lösestellung bewegt werden (Figur 8).

Eine gattungsgemäße Betätigungseinrichtung ist aus der US 6 016 718 bekannt.

Zum Betätigen der Bremse in die Bremsstellung wird der Handhebel der US 6 016 718 von der Lösestellung in die Bremsstellung betätigt, wobei über eine Wirkverbindung zwischen dem Handhebel und dem Mitnehmerelement das Mitnehmerelement von der Lösestellung in die Bremsstellung betätigt wird. Über ein an dem Mitnehmerelement befestigtes Übertragungsmittel, beispielsweise ein Seil oder ein Bremsgestänge, und durch Ziehen des Übertragungsmittels wird die Bremse in die Bremsstellung betätigt. Bei in der Bremsstellung befindlichem Mitnehmerelement und Handhebel kann die Wirkverbindung zwischen dem Handhebel und dem Mitnehmerelement getrennt werden, so dass bei in der Bremsstellung befindlichem Mitnehmerelement der Handhebel in eine Ruhestellung betätigt werden kann. Zum anschließenden Lösen der Bremse ist es erforderlich, den Handhebel von der Ruhestellung wieder in die Bremsstellung zu betätigen, um die Wirkverbindung zwischen dem Handhebel und dem Mitnehmerelement erneut herstellen zu können. Anschließend kann durch ein Betätigungsmittel ein Verriegelungsmechanismus, der das Mitnehmelement in der Bremsstellung hält, gelöst werden, so dass durch Betätigen des Handhebels von der Bremsstellung in die Lösestellung das Mitnehmerelement von der Bremsstellung in die Lösestellung betätigt werden kann, um die Bremse zu lösen. Hierbei kann es erforderlich sein, durch Betätigen des Handhebels in die Bremsstellung an dem Übertragungsmittel zu ziehen, um den Verriegelungsmechanismus zu entspannen und die Bremse durch Betätigen des Betätigungsmittels lösen zu können. In der Bremsstellung der Bremse zeigt der in der Ruhestellung befindliche Handhebel einer Bedienperson des Fahrzeugs an, ob die Bremse in die Bremsstellung betätigt ist und somit angezogen ist bzw. ob die Bremse nicht angezogen ist.

Zum Lösen der Bremse ergibt sich jedoch eine ungünstige Ergonomie für die Bedienperson, da von der Bedienperson der Handhebel von der Ruhestellung in die Bremsstellung betätigt werden muss und an dem Übertragungsmittel gezogen werden muss, wodurch zum Ziehen an dem Überragungsmittel erneut eine Kraft von der Bedienperson über den Handhebel zum Lösen der Bremse aufgebracht werden muss. Zudem ist die Stellung des Handhebels, ab welcher die Bremse gelöst werden kann, nicht eindeutig und klar definiert, so dass sich Fehlbedienungen beim Lösen der Bremse ergeben können. Insgesamt ist somit der Lösevorgang zum Lösen der Bremse für die Bedienperson unkomfortabel.

Der vorliegenden Erfindung liegt die Aufgabe zugrunde, eine Betätigungseinrichtung der eingangs genannten Gattung zur Verfügung zu stellen, bei der der Lösevorgang zum Lösen der Bremse für die Bedienperson des Fahrzeugs ergonomisch günstig und komfortabel ist.

Diese Aufgabe wird erfindungsgemäß dadurch gelöst, dass die Ruhestellung des Handhebels als Zwischenstellung zwischen der Bremsstellung und der Lösestellung ausgebildet ist und zum Lösen der Bremse bei in der Ruhestellung befindlichem Handhebel eine das Mittelnehmerelement in der Bremsstellung haltende Verriegelungseinrichtung lösbar ist und das Mitnehmerelement in Richtung einer Lösestellung betätigbar ist.

Bei der Erfindung ist die Ruhestellung des Handhebels als Zwischenstellung zwischen der Bremsstellung und der Lösestellung ausgebildet. In einer derartigen Ruhestellung als Ruheposition des Handhebels bei in der Bremsstellung befindlicher Bremse kann erzielt werden, dass der in der Ruhestellung befindliche Handhebel zu keiner Einschränkung des Beinraums oder des Fußraums im Fahrerarbeitsplatz bei einem Flurförderzeug führt und ein ungehinderter Aus- und Einstieg der Bedienperson aus bzw. in den Fahrerarbeitsplatz erzielbar ist. Zudem stellt eine derartige Ruhestellung des Handhebels eine eindeutige und definierte Stellung des Handhebels dar, in der die Bremse gelöst werden kann, so dass Fehlbedienungen beim Lösen der Bremse wirksam vermieden werden können. Erfindungsgemäß wird das Lösen der Bremse in die Ruhestellung des Handhebels ermöglicht und somit ohne ein erneutes Betätigen des Handhebels in die Bremsstellung. Hierdurch entfällt zum Lösen der Bremse ein erneutes Ziehen an dem Übertragungsmittel. Hierdurch ergibt sich ein verbesserter Komfort zum Lösen der Bremse mit einer günstigen Ergonomie. Weiterhin ist bei dem erfindungsgemäßen Bedienkonzept zum Lösen der Bremse ein schneller Lösevorgang der Bremse erzielbar, der den Komfort beim Lösen der Bremse weiter verbessert.

Gemäß einer vorteilhaften Weiterbildung der Erfindung ist ein manuell betätigbares Betätigungsmittel zum Lösen der Verriegelungseinrichtung vorgesehen. Hierdurch kann von einer Bedienperson des Fahrzeugs durch Betätigung des Betätigungsmittels auf einfache Weise bei in der Ruhestellung befindlichem Handhebel die das Mitnehmerelement in der Bremsstellung haltende Verriegelungseinrichtung gelöst werden, um die Bremse zu lösen.

Bevorzugt ist das Betätigungsmittel an dem Handhebel angeordnet. Das Betätigungsmittel kann hierbei als an dem Handhebel angeordneter Betätigungsknopf oder an dem Handhebel angeordneter Betätigungshebel ausgebildet sein.

Hinsichtlich einer günstigen Ergonomie zum Lösen der Bremse ergeben sich weitere Vorteile, wenn gemäß einer Ausgestaltungsform der Erfindung nach der Betätigung des Betätigungsmittels und Lösen der Verriegelungseinrichtung das Mitnehmerelement von der Bremsstellung in Anlage an den in der Ruhestellung befindlichen Handhebel betätigbar ist und anschließend das Mitnehmerelement bei einer Betätigung des Handhebels von der Ruhestellung in die Lösestellung in die Lösestellung betätigbar ist. Nach der Betätigung des Betätigungsmittels wird somit das Mitnehmerelement selbsttätig in Anlage an den in der Ruhestellung befindlichen Handhebel betätigt, so dass bei einer Betätigung des Handhebel von der Ruhestellung in die Lösestellung das an dem Handhebel anliegende Mitnehmerelement mit in die Lösestellung betätigt wird. Besondere Vorteile ergeben sich, wenn gemäß einer Weiterbildung der Erfindung ein Sperrmechanismus vorhanden ist, der bei in der Ruhestellung befindlichem Handhebel eine Betätigung des Handhebels in Richtung der Bremsstellung verhindert. Ein derartiger Sperrmechanismus verhindert, dass der in der Ruhestellung befindliche Handhebel erneut in die Bremsstellung betätigt werden kann. Hierdurch wird die Möglichkeit von Fehlbedienungen und der Komfort beim Lösen der Bremse weiter verbessert, da mit der Ruhestellung des Handhebels nur eine einzige definierte Stellung des Handhebels vorgesehen ist, in der die Bremse gelöst werden kann. Besondere Vorteile ergeben sich, wenn die Betätigungseinrichtung am Vorderaufbau eines als Gegengewichtsgabelstapler ausgebildeten Flurförderzeugs angeordnet ist. In der Bremsstellung kann durch das Zurückschwenken des Handhebels in die Ruhestellung eine Behinderung der Bedienperson beim Auf- und Absteigen vermieden werden und eine hohe Beinfreiheit, insbesondere im Bereich der Knie der Bedienperson, bei in der Bremsstellung befindlicher Bremse erzielt werden.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug mit einer erfindungsgemäßen Betätigungseinrichtung einer Bremse,
- Figur 2: eine Betätigungseinrichtung des Standes der Technik mit einer Verdeutlichung des Bewegungsablaufes des Handhebels beim Betätigen der Bremse in die Bremsstellung,
- Figur 3: eine Betätigungseinrichtung des Standes der Technik mit einer Verdeutlichung des Bewegungsablaufes des Handhebels beim Betätigen der Bremse in die Lösestellung,
- Figur 4: eine erfindungsgemäße Betätigungseinrichtung mit einer Verdeutlichung des Bewegungsablaufes des Handhebels beim Betätigen der Bremse in die Bremsstellung und
- Figur 5: eine erfindungsgemäße Betätigungseinrichtung mit einer Verdeutlichung des Bewegungsablaufes des Handhebels beim Betätigen der Bremse in die Lösestellung.

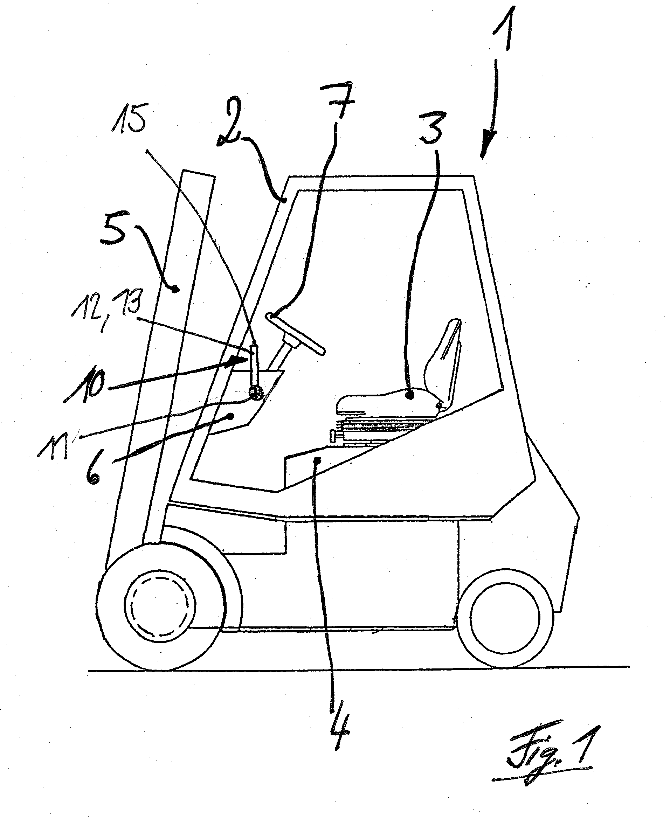

In der Figur 1 ist ein als Gegengewichtsgabelstapler ausgebildetes Flurförderzeug 1 dargestellt. Innerhalb eines Fahrerschutzdaches 2 ist ein Fahrerarbeitsplatz ausgebildet, der beispielsweise einen Fahrersitz 3 umfasst. Der Fahrersitz 3 kann auf eine Batterie- oder Motorhaube 4 angeordnet sein. Im vorderen, einem Hubmast 5 zugewandten Bereich des Fahrerschutzdaches 2, dem sogenannten Vorderaufbau, ist eine Bedienkonsole 6, beispielsweise ein Armaturenbrett, angeordnet. An der Bedienkonsole 6 ist eine Lenkrad 7 und eine Betätigungseinrichtung 10 für eine beispielsweise als Feststellbremse ausgebildete manuell betätigbare Bremse angeordnet.

Die Betätigungseinrichtung 10 umfasst einen um eine Schwenkachse 11 schwenkbar gelagerten Betätigungshebel 12, der mittels eines nicht näher dargestellten Übertragungsmittels, beispielsweise eines Seils, eines Bowdenzugs oder eines Gestänges, mit der Bremse in Wirkverbindung steht. Der Betätigungshebel 12 umfasst einen von einer Bedienperson betätigbaren Handhebel 13 und ein mit dem Handhebel 13 in Wirkverbindung bringbares und mittels des Handhebels 13 betätigbares, nicht näher dargestelltes Mitnehmerelement. Das Mitnehmerelement steht mit dem Übertragungsmittel in Verbindung, das an dem Mitnehmerelement befestigt ist.

Das Mitnehmerelement kann beispielsweise als Kniehebel ausgebildet werden, der zwei Hebelstellungen für die Bremsstellung und die Lösestellung aufweist und zwischen diesen Stellungen verschwenkbar ist. Bei einem derartigen Kniehebel kann in der Bremsstellung eine Totpunktverriegelung als Verriegelungseinrichtung vorgesehen sein, die zum Lösen der Bremse gelöst werden muss.

Das Mitnehmerelement kann alternativ als Ratsche ausgebildet sein, die mit einer feststehenden Verzahnung zusammenwirkt und mehrere Rastpositionen als Bremsstellung aufweist. Bei einer derartigen Ratsche kann in der Bremsstellung eine mit der Verzahnung zusammenwirkende Sperrklinke als Verriegelungseinrichtung vorgesehen sein, die zum Lösen der Bremse gelöst werden muss.

In der in der Figur 1 dargestellten Stellung befindet sich die Betätigungseinrichtung 10 in einer Lösestellung, in der die Bremse gelöst ist.

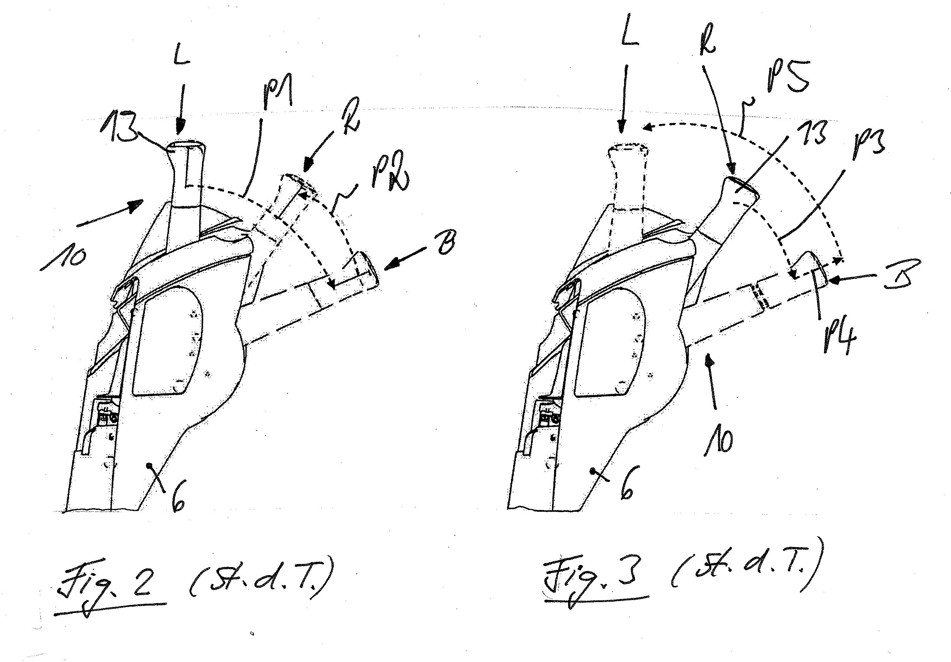

In den Figuren 2 und 3 ist der Bewegungsablauf einer aus einem Handhebel 13 und einem Mitnehmerelement bestehenden Betätigungseinrichtung 10 des Standes der Technik näher dargestellt, wobei die Figur 2 den Bewegungsablauf des Handhebels 13 beim Betätigen der Bremse von der Lösestellung in die Bremsstellung und die Figur 3 den Bewegungsablauf des Handhebels 13 beim Betätigen der Bremse von der Bremsstellung in die Lösestellung zeigt.

Zum Betätigen der Bremse in die Bremsstellung wird der Handhebel 13 von der Lösestellung L - wie durch den Pfeil P1 in der Figur 2 verdeutlicht - in die Bremsstellung B verschwenkt. Über eine Wirkverbindung zwischen dem Handhebel 13 und dem nicht näher dargestellten Mitnehmerelement wird das Mitnehmerelement von der Lösestellung in die Bremsstellung betätigt. Über das an dem Mitnehmerelement befestigte Übertragungsmittel, beispielsweise ein Seil, ein Bowdenzug oder ein Bremsgestänge, und durch Ziehen des Übertragungsmittels wird die Bremse in die Bremsstellung betätigt. Bei in der Bremsstellung B befindlichem Mitnehmerelement und Handhebel 13 kann die Wirkverbindung zwischen dem Handhebel 13 und dem Mitnehmerelement getrennt werden, so dass bei in der Bremsstellung befindlichem Mitnehmerelement der Handhebel 13 zurück in eine Ruhestellung R verschwenkt werden kann, wie durch den Pfeil P2 verdeutlicht. Das Mitnehmerelement wird in der Lösestellung von einer nicht näher dargestellten Verriegelungseinrichtung gehalten.

Die Ruhestellung des Handhebels 12 bei in der Bremsstellung befindlicher Bremse befindet sich zwischen der Lösestellung L und der Bremsstellung B und ist derart gewählt, dass der Handhebel 13 zu keiner Einschränkung des Fußraums bzw. des Beinraums, insbesondere auf Höhe der Knie, einer in dem Fahrerarbeitsplatz befindlichen bzw. ein- oder aussteigenden Bedienperson darstellt.

Zum anschließenden Lösen der Bremse ist es bei einer Betätigungseinrichtung 10 des Standes der Technik erforderlich, den Handhebel - wie in der Figur 3 dargestellt ist - von der Ruhestellung R erneut in die Bremsstellung B zu betätigen, wie in der Figur 3 durch den Pfeil P3 verdeutlicht ist. Anschließend kann durch ein Betätigungsmittel 15, das - wie aus der Figur 3 mit dem Pfeil P4 ersichtlich ist - von einem längverschiebbaren Handgriff des Handhebels 12 gebildet ist, der Verriegelungsmechanismus, der das Mitnehmelement in der Bremsstellung hält, gelöst werden und die Wirkverbindung zwischen dem Handhebel 13 und dem Mitnehmerelement erneut herstellen zu können, so dass durch Betätigen des Handhebels 13 von der Bremsstellung B in die Lösestellung L - wie in der Figur 3 durch den Pfeil P5 verdeutlicht ist - das Mitnehmerelement von der Bremsstellung in die Lösestellung betätigt werden kann, um die Bremse zu lösen. Zum Lösen der Bremse kann es erforderlich sein, durch Betätigen des Handhebels 13 in die Bremsstellung B an dem Übertragungsmittel erneut zu ziehen, um den Verriegelungsmechanismus zu entspannen und die Bremse durch Betätigen des Betätigungsmittels 15 lösen zu können.

Dieses Bedienkonzept und Bewegungsablauf des Handhebels 13, bei dem zum Lösen der Bremse der Handhebel 13 erneut vollständig in die Bremsstellung B verschwenkt werden muss und von der Bedienperson an dem Handhebel 13 eine Kraft zum Spannen des Übertragungsmittels aufgebracht werden muss, ist für die Bedienperson ergonomisch ungünstig und unkomfortabel.

Sofern das Mitnehmerelement als Ratsche ausgebildet, das mit einer feststehenden Verzahnung zusammenwirkt und in der Bremsstellung in mehreren Stellungen arretierbar ist, ergibt sich als weiterer Nachteil, dass die Stellung des Handhebels 13, in der die Bremse gelöst werden kann, nicht eindeutig und klar definiert ist.

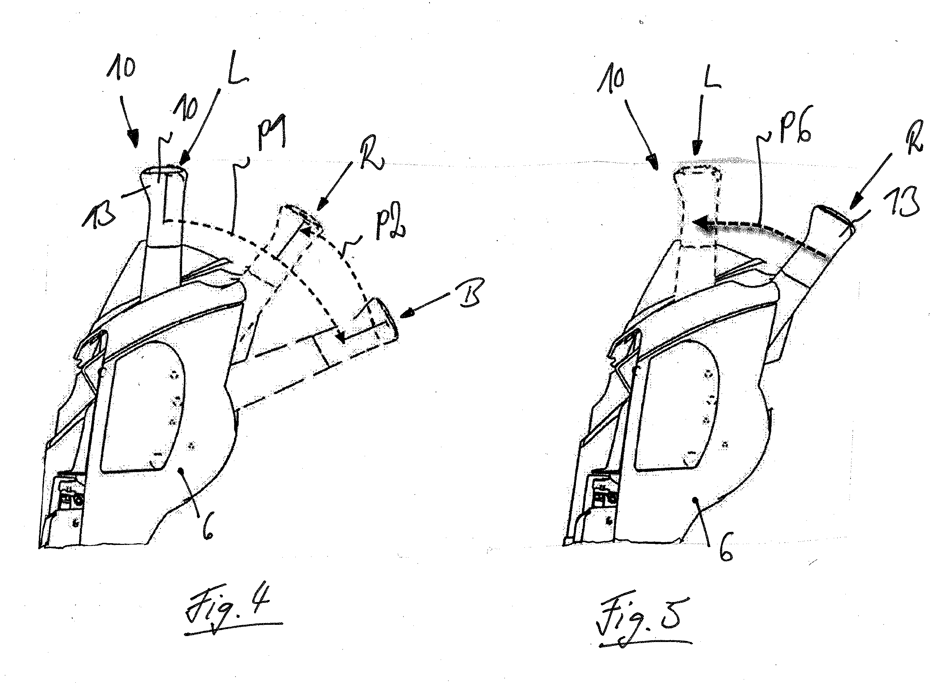

In den Figuren 4 und 5 ist das Bedienkonzept einer erfindungsgemäßen Betätigungseinrichtung 10 dargestellt. Die Figur 4 zeigt den Bewegungsablauf des Handhebels 13 beim Betätigen der Bremse von der Lösestellung in die Bremsstellung und die Figur 5 den Bewegungsablauf des Handhebels 13 beim Betätigen der Bremse von der Bremsstellung in die Lösestellung zeigt.

Die Betätigung der Bremse von der Lösestellung in die Bremsstellung entspricht dem in der Figur 2 dargestellten Ablauf.

Zum Betätigen der Bremse in die Bremsstellung wird der Handhebel 13 von der Lösestellung L - wie durch den Pfeil P1 in der Figur 4 verdeutlicht - in die Bremsstellung B verschwenkt. Über eine Wirkverbindung zwischen dem Handhebel 13 und dem nicht näher dargestellten Mitnehmerelement wird das Mitnehmerelement von der Lösestellung in die Bremsstellung betätigt. Über das an dem Mitnehmerelement befestigte Übertragungsmittel, beispielsweise ein Seil, ein Bowdenzug oder ein Bremsgestänge, und durch Ziehen des Übertragungsmittels wird die Bremse in die Bremsstellung betätigt. Bei in der Bremsstellung B befindlichem Mitnehmerelement und Handhebel 13 kann die Wirkverbindung zwischen dem Handhebel 13 und dem Mitnehmerelement getrennt werden, so dass bei in der Bremsstellung befindlichem Mitnehmerelement der Handhebel 13 zurück in eine Ruhestellung R verschwenkt werden kann, wie durch den Pfeil P2 verdeutlicht. Das Mitnehmerelement wird in der Lösestellung von einer nicht näher dargestellten Verriegelungseinrichtung gehalten.

Die Ruhestellung des Handhebels 12 bei in der Bremsstellung befindlicher Bremse befindet sich analog zu der Figur 2 zwischen der Lösestellung L und der Bremsstellung B und ist derart gewählt, dass der Handhebel 13 zu keiner Einschränkung des Fußraums bzw. des Beinraums, insbesondere auf Höhe der Knie, einer in dem Fahrerarbeitsplatz befindlichen bzw. ein- oder aussteigenden Bedienperson darstellt.

Bei der erfindungsgemäßen Betätigungseinrichtung 10 wird das Lösen der Bremse ohne ein erneutes Ausschwenken und Betätigen des Handhebels 13 in die Bremsstellung B ermöglicht und somit das Lösen der Bremse bei in der Ruhestellung R befindlichem Handhebel 13 ermöglicht. Hierzu ist die das Mitnehmerelement in der Bremsstellung haltende Verriegelungseinrichtung bei in der Ruhestellung R befindlichem Handhebel 13 lösbar und nach Lösen der Verriegelungseinrichtung das Mitnehmerelement in Richtung der Lösestellung betätigbar ist.

Hierzu ist bei in der Ruhestellung befindlichem Handhebel 13 ein manuell betätigbares Betätigungsmittel 15 zu betätigen, um die das Mitnehmerelement in der Bremsstellung haltende Verriegelungseinrichtung zu lösen. Das Betätigungsmittel 15 ist gemäß der Figur 1 bevorzugt von einem an dem Handhebel 13 angeordneten Betätigungsknopf gebildet.

Nach der Betätigung des Betätigungsmittels 15 wird das Mitnehmerelement von der Bremsstellung in Anlage an den in der Ruhestellung R befindlichen Handhebel 13 betätigt, so dass durch anschließendes Zurückschwenken des Handhebels 13 von der Ruhestellung R in die Lösestellung L - wie in der Figur 5 durch den Pfeil P6 verdeutlicht ist - das Mitnehmerelement ebenfalls in die Lösestellung betätigt wird und die Bremse gelöst wird.

Bei dem Bedienkonzept und Bewegungsablauf des Handhebels 13 der erfindungsgemäßen Betätigungseinrichtung 10 zum Lösen der Bremse ist das Entriegeln der Verriegelungseinrichtung des Mitnehmerelements in der Ruhestellung des Handhebels 13 ohne erneutes Betätigen des Handhebels 13 in die Bremsstellung B möglich, so dass auch das erneute Aufbringen einer Kraft zum Spannen des Übertragungsmittels und Entlasten der Verriegelungseinrichtung entfällt.

Durch den vereinfachten Bewegungsablauf des Handhebels 13 beim Lösen der Bremse und den Entfall einer erneut aufzubringenden Kraft zum Spannen des Übertragungsmittels ist bei der erfindungsgemäßen Betätigungseinrichtung 10 eine verbesserte Ergonomie und ein verbesserter Komfort für die Bedienperson beim Lösen der Bremse erzielbar.

Sofern gemäß einer Weiterbildung der Erfindung ein Sperrmechanismus vorhanden ist, der bei in der Ruhestellung R befindlichem Handhebel 13 eine Betätigung des Handhebels 13 in Richtung der Bremsstellung B verhindert und nur eine Betätigung des Handhebels 13 von der Ruhestellung R in die Lösestellung L zulässt, wird erzielt, dass mit der Ruhestellung R des Handhebels 13 eine einzige definierte und klare Stellung des Handhebels 13 geben ist, in der die Bremse gelöst werden kann. Hierdurch wird der Komfort für die Bedienperson beim Lösen der Bremse weiter verbessert und erhöht.

## Patentansprüche

1. Betätigungseinrichtung (10) für eine manuell betätigbare Bremse, insbesondere Feststellbremse, eines Fahrzeugs, insbesondere eines Flurförderzeugs, mit einem schwenkbar gelagerten Betätigungshebel (12), der mittels eines Übertragungsmittels mit der Bremse in Wirkverbindung steht, wobei der Betätigungshebel (12) einen Handhebel (13) und ein mittels des Handhebels (13) betätigbares Mitnehmerelement aufweist, wobei das Mitnehmerelement mit dem Übertragungsmittel in Verbindung steht, wobei zum Betätigen der Bremse in eine Bremsstellung der Handhebel (13) von einer Lösestellung (L) in eine Bremsstellung (B) betätigbar ist, um das Mitnehmerelement in eine Bremsstellung zur Betätigung der Bremse zu betätigen, und wobei bei in einer Bremsstellung befindlichem Mitnehmerelement der Handhebel (13) in eine Ruhestellung (R) bewegbar ist, wobei die Ruhestellung (R) des Handhebels (13) als Zwischenstellung zwischen der Bremsstellung (B) und der Lösestellung (L) ausgebildet ist, **dadurch gekennzeichnet, dass** zum Lösen der Bremse bei in der Ruhestellung (R) befindlichem Handhebel (13) eine das Mittelnehmerelement in der Bremsstellung haltende Verriegelungseinrichtung lösbar ist und das Mitnehmerelement in Richtung einer Lösestellung betätigbar ist.

2. Betätigungseinrichtung nach Anspruch 1, **dadurch gekennzeichnet, dass** ein manuell betätigbares Betätigungsmittel (15) zum Lösen der Verriegelungseinrichtung vorgesehen ist.

3. Betätigungseinrichtung nach Anspruch 2, **dadurch gekennzeichnet, dass** das Betätigungsmittel (15) an dem Handhebel (13) angeordnet ist.

4. Betätigungseinrichtung nach Anspruch 2 oder 3, **dadurch gekennzeichnet, dass** nach der Betätigung des Betätigungsmittels (15) und Lösen der Verriegelungseinrichtung das Mitnehmerelement von der Bremsstellung in Anlage an den in der Ruhestellung (R) befindlichen Handhebel (13) betätigbar ist und anschließend das Mitnehmerelement bei einer Betätigung des Handhebels (13) von der Ruhestellung (R) in die Lösestellung (L) in die Lösestellung betätigbar ist.

5. Betätigungseinrichtung nach einem der Ansprüche 1 bis 4, **dadurch gekennzeichnet, dass** ein Sperrmechanismus vorhanden ist, der bei in der Ruhestellung (R) befindlichem Handhebel (13) eine Betätigung des Handhebels (13) in Richtung der Bremsstellung (B) verhindert.

6. Flurförderzeug mit einer Betätigungseinrichtung nach einem der Ansprüche 1 bis 5, **dadurch gekennzeichnet, dass** die Betätigungseinrichtung (10) am Vorderaufbau (6) des als Gegengewichtsgabelstapler ausgebildeten Flurförderzeugs (1) angeordnet ist.

## Claims

1. Actuation device (10) for a manually actuable brake, in particular a handbrake, of a vehicle, in particular of an industrial truck, having a pivotably mounted actuating lever (12) which is operatively connected to the brake by means of a transmission means, wherein the actuating lever (12) has a hand lever (13) and a driver element which is actuable by means of the hand lever (13), wherein the driver element is connected to the transmission means, wherein, in order to actuate the brake into a braking position, the hand lever (13) is actuable from a release position (L) into a braking position (B) in order to actuate the driver element into a braking position for the actuation of the brake, and wherein, when the driver element is in a braking position, the hand lever (13) is movable into an inoperative position (R), wherein the inoperative position (R) of the hand lever (13) is configured as an intermediate position between the braking position (B) and the release position (L), **characterized in that**, in order to release the brake when the hand lever (13) is in the inoperative position (R), a locking device keeping the driver element in the braking position is releasable, and the driver element is actuable in the direction of a release position.

2. Actuation device according to Claim 1, **characterized in that** a manually actuable actuating means (15) for releasing the locking device is provided.

3. Actuation device according to Claim 2, **characterized in that** the actuating means (15) is arranged on the hand lever (13).

4. Actuation device according to Claim 2 or 3, **characterized in that**, after actuation of the actuating means (15) and release of the locking device, the driver element is actuable from the braking position to bear against the hand lever (13), which is in the inoperative position (R), and then, when the hand lever (13) is actuated from the inoperative position (R) into the release position (L), the driver element is actuable into the release position.

5. Actuation device according to one of Claims 1 to 4, **characterized in that** there is a blocking mechanism which, when the hand lever (13) is in the inoperative position (R), prevents actuation of the hand lever (13) in the direction of the braking position (B).

6. Industrial truck with an actuation device according to one of Claims 1 to 5, **characterized in that** the actuation device (10) is arranged on the front body (6) of the industrial truck (1) which is configured as a counterweight fork-lift truck.

## Revendications

1. Dispositif d'actionnement (10) pour un frein à commande manuelle, en particulier un frein de stationnement d'un véhicule, en particulier d'un chariot de manutention, comprenant un levier d'actionnement (12) supporté de manière pivotante, qui est en liaison fonctionnelle avec le frein par le biais d'un moyen de transmission, le levier d'actionnement (12) présentant un levier manuel (13) et un élément d'entraînement pouvant être actionné au moyen du levier manuel (13), l'élément d'entraînement étant en liaison avec le moyen de transmission, le levier manuel (13), pour l'actionnement du frein dans une position de freinage, pouvant être actionné d'une position desserrée (L) dans une position de freinage (B) afin d'actionner l'élément d'entraînement dans une position de freinage pour l'actionnement du frein, et le levier manuel (13), lorsque l'élément d'entraînement se trouve dans une position de freinage, déplaçable dans une position de repos (R), la position de repos (R) du levier manuel (13) étant réalisée sous forme de position intermédiaire entre la position de freinage (B) et la position desserrée (L), **caractérisé en ce que** pour desserrer le frein, lorsque le levier manuel (13) se trouve dans la position de repos (R), un dispositif de verrouillage retenant l'élément d'entraînement dans la position de freinage peut être desserré et l'élément d'entraînement peut être actionné dans la direction d'une position desserrée.

2. Dispositif d'actionnement selon la revendication 1, **caractérisé en ce qu'**un moyen d'actionnement (15) pouvant être actionné manuellement est prévu pour desserrer le dispositif de verrouillage.

3. Dispositif d'actionnement selon la revendication 2, **caractérisé en ce que** le moyen d'actionnement (15) est disposé sur le levier manuel (13).

4. Dispositif d'actionnement selon la revendication 2 ou 3, **caractérisé en ce qu'**après l'actionnement du moyen d'actionnement (15) et desserrage du dispositif de verrouillage, l'élément d'entraînement peut être actionné depuis la position de freinage en appui contre le levier manuel (13) se trouvant dans la position de repos (R) et ensuite l'élément d'entraînement peut être actionné dans la position desserrée lors d'un actionnement du levier manuel (13) de la position de repos (R) dans la position desserrée (L).

5. Dispositif d'actionnement selon l'une quelconque des revendications 1 à 4, **caractérisé en ce qu'**un mécanisme de blocage est prévu, lequel, lorsque le levier manuel (13) se trouve dans la position de repos (R), empêche un actionnement du levier manuel (13) dans la direction de la position de freinage (B).

6. Chariot de manutention comprenant un dispositif d'actionnement selon l'une quelconque des revendications 1 à 5, **caractérisé en ce que** le dispositif d'actionnement (10) est disposé sur la partie avant de la caisse (6) du chariot de manutention (1) réalisé sous forme de chariot élévateur à fourche à contrepoids.
